# EUROPÄISCHE PATENTSCHRIFT

(11) **EP 2 227 938 B1**
(45) Veröffentlichungstag und Bekanntmachung des Hinweises auf die Patenterteilung: **09.05.2012**
(21) Anmeldenummer: 10002099.9
(22) Anmeldetag: 02.03.2010
(51) Int. Cl.: A01D 34/73

(54) **Messerkopf eines handgeführten Arbeitsgerätes**
Cutting head of a handheld tool
Tête de coupe d'un outil à main

(30) Priorität: 14.03.2009 DE 102009013277
(43) Veröffentlichungstag der Anmeldung: 15.09.2010
(73) Patentinhaber: Andreas Stihl AG & Co. KG, 71336 Waiblingen (DE)
(72) Erfinder: Apfel, Norbert, 71334 Waiblingen (DE); Theile, Marc, 70736 Fellbach (DE)
(74) Vertreter: Wasmuth, Rolf

(56) Entgegenhaltungen:
- DE-A1- 19 542 144
- DE-U1- 8 904 406
- FR-A1- 2 893 222
- US-A1- 2003 074 877
- US-A1- 2004 006 962

## Beschreibung

Die Erfindung betrifft einen Messerkopf eines handgeführten Arbeitsgerätes mit den Merkmalen nach dem Oberbegriff des Anspruchs 1.

Freischneider, Rasenmäher oder dgl. weisen einen Messerkopf auf, bei dem ein um eine Drehachse drehend antreibbares Schneidmesser zwischen zwei Druckstücken eingespannt ist. Ein erstes Druckstück wird durch einen motorseitig angeordneten, so genannten Anlageteller mit einem mittig hervorstehenden Achszapfen gebildet. Das Schneidmesser wird mit einer mittigen Wellenöffnung auf den Achszapfen aufgesteckt und zur Anlage an den Anlageteller gebracht. Schließlich wird das weitere Druckstück, welches in Form einer Kreisscheibe ausgebildet ist, auf den Achszapfen aufgesteckt und in axialer Richtung gegenüber dem Anlageteller verspannt, wodurch das Schneidmesser zwischen den beiden Druckstücken klemmend gehalten ist. Ein derartiger Messerkopf ist beispielsweise aus der DE 195 42 144 A1 bekannt.

Das Schneidmesser weist mindestens zwei Messerflügel auf, die sich in einer zur Drehachse radialen Richtung entlang einer Längsachse erstrecken. Im Betrieb wird das Schneidmesser durch den Antriebsmotor des Arbeitsgerätes in Drehung versetzt, wobei das Antriebsdrehmoment von den beiden Druckstücken durch Form- oder Reibschluss auf das Schneidmesser übertragen wird. Der insbesondere als einzylindriger Verbrennungsmotor ausgeführte Antriebsmotor erzeugt ein ungleichförmiges Drehmoment, welches als Schwingungserregung auf das Schneidmesser wirkt. Die Schneiden des Schneidmessers treffen auf Schnittgut, was ebenfalls zu einer ungleichförmigen Belastung des Schneidmessers und damit zu einer Schwingungserregung führt. Die in der radialen Richtung langgestreckte Bauform der Messerflügel bedingt eine elastische Nachgiebigkeit, wodurch ein schwingungsfähiges System entsteht. Die vorgenannten Schwingungserregungen können dazu führen, dass das Schneidmesser bzw. seine Messerflügel im Betrieb unerwünschte Schwingungen ausführen.

Die Druckschriften US 2003/074877 A1 und US 2004/0006962 A1 zeigen noch weitere Ausführungen von Messerköpfen, bei denen Druckstücke nicht kreisförmig ausgebildet sind, sondern eine Längserstreckung aufweisen. Die Längsachse der Druckstücke liegt parallel zur jeweiligen Längsachse des zugeordneten Schneidmessers, wodurch insgesamt symmetrische Ausgestaltungen bezogen auf die genannten Längsachsen entsteht. Eine signifikante Verringerung von unerwünschten Schwingungen ist hierdurch nicht erreichbar.

Der Erfindung liegt die Aufgabe zugrunde, einen gattungsgemäßen Messerkopf derart weiterzubilden, dass die Schwingungsanfälligkeit des Schneidmessers verringert ist.

Diese Aufgabe wird durch einen Messerkopf mit den Merkmalen des Anspruchs 1 gelöst.

Es wird ein Messerkopf vorgeschlagen, bei dem zumindest eines der Druckstücke mindestens einen radialen Dämpfungsvorsprung aufweist, der am Messerflügel anliegt. Bevorzugt weist das Druckstück für jeden Messerflügel je einen radialen Dämpfungsvorsprung auf. Das Druckstück weicht demnach von der vorbekannten Kreisform ab und erhält in Richtung des bzw. der Messerflügel eine langgestreckte Form. Durch die Anlage am Messerflügel verhindert der Dämpfungsvorsprung in seinem radial hervorstehenden Dämpfungsbereich die Ausbildung einer insbesondere harmonischen Schwingung des Messerflügels. Außerdem wirkt die flächige Anlage als Reibdämpfer. Die in der radialen Richtung langgestreckte Bauform des Dämpfungsvorsprunges bringt einen nur geringen Einsatz von eigenschwingfähiger Masse. Insgesamt wird dadurch die Neigung der Messerflügel zum Schwingen deutlich reduziert oder sogar vollständig unterbunden. Die Längsachse des Dämpfungsvorsprunges ist darüber hinaus gegenüber der Längsachse des Messerflügels winkelversetzt. Es entsteht eine unsymmetrische Anordnung, die die Ausbildung von Eigenschwingungen im Messerflügel erschwert, wodurch die Wirksamkeit der Anordnung gesteigert ist.

In einer bevorzugten Ausführungsform begrenzt ein Nabenbereich des Druckstückes einen Spannkreis mit einem Radius zur Drehachse. Ein radial äußerster Punkt des Dämpfungsvorsprunges liegt in einem Radius zur Drehachse. Der Radius des radial äußersten Punktes ist mindestens 1,5 mal und bevorzugt mindestens doppelt so groß wie der Radius des Spannkreises. Die hierdurch vorgegebene langgestreckte Bauform des Dämpfungsvorsprunges erzeugt in hinreichender Weise die gewünschte Wirkung einer Schwingungsunterdrückung bzw. -dämpfung.

Es kann zweckmäßig sein, dass beide Druckstücke oder das motorseitige, als Anlageteller ausgebildete Druckstück mit radialen Dämpfungsvorsprüngen' versehen sind. Bevorzugt ist aber das erste Druckstück als motorseitiger Anlageteller in Kreisscheibenform ausgebildet, während das zweite, gegenüberliegende Druckstück mit dem mindestens einem radialen Dämpfungsvorsprung versehen ist. Dies ermöglicht die Verwendung von bereits vorhandenen Arbeitsgeräten mit unmodifizierten Werkzeugköpfen bzw. Anlagetellern. Lediglich das außenseitig aufgesetzte Druckstück ist dann in der erfindungsgemäßen Ausgestaltung mit Dämpfungsvorsprüngen auszugestalten und kann als Ersatz für vorhandene, kreisscheibenförmige Druckstücke bei vorhandenen Arbeitsgeräten eingesetzt werden. Außerdem erlaubt der unmodifizierte Anlageteller den Einbau von anderen Werkzeugen, bei denen der Einsatz von Druckstücken mit Dämpfungsvorsprung nicht erforderlich oder nicht erwünscht ist.

In vorteilhafter Weiterbildung ist eine insbesondere in beide Drehrichtungen wirkende Verdrehsicherung zwischen dem Schneidmesser und dem Druckstück mit dem mindestens einen radialen Dämpfungsvorsprung vorgesehen. Im Betrieb unvermeidliche Stoßbelastungen oder dgl. können nicht zu einem Durchrutschen des Schneidmessers relativ zum Druckstück führen. Beide Bauteile bleiben dauerhaft in der vorgesehenen relativen Drehwinkelposition zueinander, wodurch die Wirkung der Schwingungsunterdrückung dauerhaft aufrechterhalten bleibt.

Die Verdrehsicherung kann in Form einer Niet-, Schweiß- oder Klebeverbindung ausgeführt sein. Bevorzugt ist zwischen dem radialen Dämpfungsvorsprung und dem zugeordneten Messerflügel eine formschlüssige Verdrehsicherung insbesondere in Form einer ungebogenen Lasche vorgesehen. Druckstück und Schneidmesser lassen sich insbesondere bei Wartungsarbeiten leicht voneinander trennen. Außerdem bleibt ein Minimum an Relativbeweglichkeit zwischen beiden Bauteilen bestehen, wodurch eine reibende Dämpfungswirkung entsteht.

Am Dämpfungsvorsprung sind vorteilhaft in einem radial außerhalb des Nabenbereichs liegenden Dämpfungsbereich Maßnahmen zur Massereduktion insbesondere in Form von Breiten- und/oder Dickenreduktion, von Aussparungen, Öffnungen und/oder dgl. getroffen. Hierdurch ist nicht nur die Gesamtmasse des drehenden Systems in erwünschter Weise verringert. Vielmehr verändert die Massereduktion im radial äußeren Dämpfungsbereich die Eigenschwingungen des Dämpfungsvorsprunges in Form und Frequenz.

Es kann zweckmäßig sein, das Druckstück mit den Dämpfungsvorsprüngen einteilig auszuführen und als Einzelteil einzusetzen. In einer vorteilhaften Variante sind mehrere Dämpfungsvorsprünge bzw. Druckstücke mit solchen Dämpfungsvorsprüngen insbesondere mit unterschiedlicher radialer Erstreckung übereinander gestapelt. Ergänzend zu den vorgenannten vorteilhaften Wirkungen stellt sich noch ein zusätzlicher Dämpfungseffekt vergleichbar zu dem eines Blattfederpaketes ein, bei dem die einzelnen, lamellenartig übereinandergeschichteten Elemente gegeneinander reiben und dadurch eingetragene Schwingungsenergie dissipieren.

Es kann vorteilhaft sein, das Schneidmesser und das mit den Dämpfungsvorsprüngen versehene Druckstück insgesamt eben auszuführen, wobei beide Bauteile flächig aneinander anliegen. In einer bevorzugten Variante ist ein radial äußeres Ende des Dämpfungsvorsprungs zum Messerflügel hin abgewinkelt und liegt mit Vorspannung am Messerflügel an. Hierdurch ist sichergestellt, dass diese Anlage auch bei einer vom Dämpfungsvorsprung fortweisenden elastischen Auslenkung des Messerflügels aufrechterhalten bleibt. Am radial äußeren Ende entsteht ein präzise definierter Anlagebereich mit der gewünschten Wirkung einer Schwingungsunterdrückung, was eine präzise Abstimmung der Eigenfrequenzen des Gesamtsystems auf die in Frage kommenden Erregerfrequenzen ermöglicht, und was die Verhinderung der Ausbildung von Betriebsschwingungen erleichtert.

In vorteilhafter Weiterbildung ist zumindest der Dämpfungsvorsprung und insbesondere das Druckstück mit dem mindestens einen Dämpfungsvorsprung insgesamt aus einem leichten Werkstoff, insbesondere aus Titan gebildet, dessen spezifische Masse geringer ist als die spezifische Masse des Schneidmessers. Dies trägt positiv zur Verschiebung der Eigenfrequenzen und -Formen des schwingenden Systems hin zu unkritischen Bereichen bei.

Im einer bevorzugten Ausführungsform sind am Dämpfungsvorsprung auf dessen dem Messerflügel zugewandten Seite reibwerterhöhende Maßnahmen getroffen. Einerseits wird hierdurch ein Verrutschen des Dämpfungsvorsprunges gegenüber dem Messerflügel vermieden. Andererseits kann durch eine beim Schwingen reibende Relativbewegung ein erhöhter Anteil der Schwingungsenergie durch Reibung dissipiert werden.

Vorteilhaft kann eine Verliersicherung des Druckstückes mit dem mindestens einen Dämpfungsvorsprung gegenüber dem Schneidmesser vorgesehen sein. Beim Auswechseln des Schneidmessers oder bei Wartungsarbeiten daran kann das Druckstück nicht verloren gehen. Außerdem hält die Verliersicherung den Dämpfungsvorsprung in der vorgesehenen Drehwinkellage relativ zum Messerflügel, so dass Fehlmontagen vermieden sind.

Ausführungsbeispiele der Erfindung sind nachfolgend anhand der Zeichnungen näher beschrieben. Es zeigen:
- Fig. 1: in einer perspektivischen Ansicht ein teilweise schematisch dargestelltes handgeführtes Arbeitsgerät am Beispiel eines Freischneiders mit einem Messer- kopf, umfassend kreisscheibenförmige Druckstücke nach dem Stand der Technik;
- Fig. 2: in einer Seitenansicht eine erfindungsgemäße Weiter- bildung des Messerkopfes nach Fig. 1 mit einem einen Dämpfungsbereich aufweisenden Druckstück;
- Fig. 3: eine perspektivische Ansicht des Druckstückes nach Fig. 2 mit Einzelheiten seiner geometrischen Ausge- staltung;
- Fig. 4: eine Draufsicht des Messerkopfes nach Fig. 2 mit Ein- zelheiten zum Zusammenwirken zwischen dem Druckstück und dem Schneidmesser;
- Fig. 5: in schematischer Draufsicht eine Variante der Anord- nung nach Fig. 4 mit optionaler beidseitiger Verdreh- sicherung;
- Fig. 6: in schematischer Darstellung eine weitere Variante der Ausführung nach den Fig. 4 oder 5 mit einer form- schlüssigen Verdrehsicherung im Nabenbereich; die nicht unter die Ansprüche fällt;
- Fig. 7: eine weitere Variante der Anordnung nach den Fig. 4 bis 6 mit einer Öffnung im Dämpfungsvorsprung als Maßnahme zur Massereduktion; die nicht unter die Ansprüche fällt;
- Fig. 8: eine Abwandlung des Ausführungsbeispieles nach Fig. 7 mit einer Aussparung anstelle der Öffnung; die nicht unter die Ansprüche fällt;
- Fig. 9: ein weiteres schematisch dargestelltes Ausführungs- beispiel mit mehreren, lamellenartig übereinander geschichteten Dämpfungsvorsprüngen; die nicht unter die Ansprüche fällt;
- Fig. 10: in einer schematischen Längsschnittdarstellung den erfindungsgemäß ausgeführten Messerkopf mit ebenen, flächig aneinanderliegenden Messerflügeln und Dämp- fungsvorsprüngen;
- Fig. 11: eine Variante der Anordnung nach Fig. 10 mit einem radial außen abgeflachten Dämpfungsbereich des Druck- stückes;
- Fig. 12: eine Abwandlung der Anordnung nach den Fig. 10 oder 11 mit einem als Tiefziehteil ausgebildeten, mit einer umlaufenden Kante am Messerflügel anliegenden Druckstück;
- Fig. 13: eine Variante der Anordnung nach Fig. 12 mit einem nur an seinem radial äußeren Ende am Messerflügel anliegenden Druckstück.

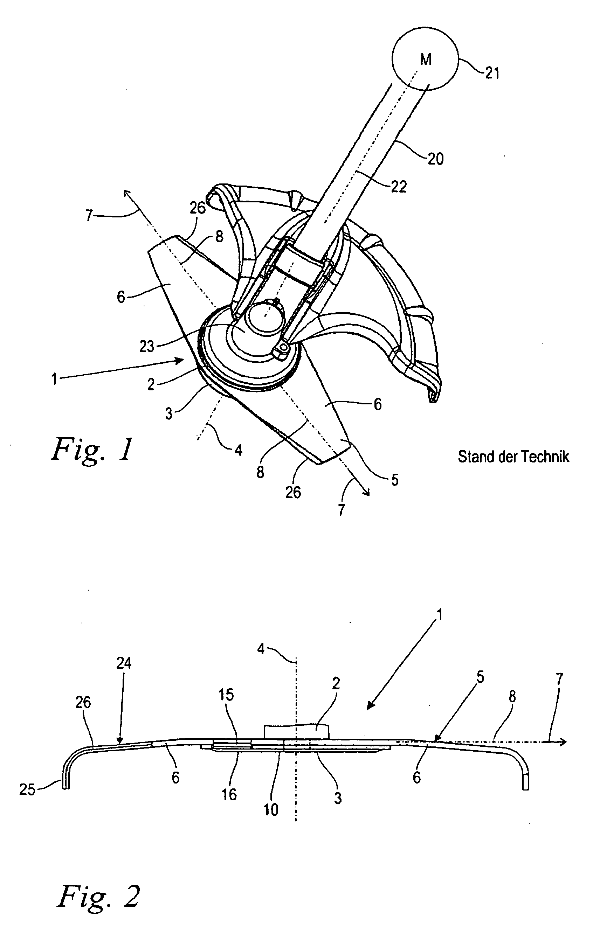

Fig. 1 zeigt in einer perspektivischen Ansicht ein teilweise schematisch dargestelltes handgeführtes Arbeitsgerät am Beispiel eines Freischneiders mit einem Messerkopf 1 und einem angedeuteten Antriebsmotor 21. Der Antriebsmotor 21 ist ein Verbrennungsmotor, kann aber auch ein Elektromotor für den Netz- oder Akkubetrieb sein. Außerdem können auch andere motorisch angetriebene Arbeitsgeräte wie ein handgeführter Rasenmäher, ein Aufsitzrasenmäher oder dgl. vorgesehen sein. Der Antriebsmotor 21 treibt drehend eine nicht dargestellte, in einem Führungsrohr 20 geführte Antriebswelle an. An seinem dem Antriebsmotor 21 gegenüberliegenden Ende des Führungsrohres 20 ist ein Getriebekopf 23 mit einem Winkelgetriebe angeordnet. Dort wird die Drehbewegung der Antriebswelle im Führungsrohr 20 auf den Messerkopf 1 übertragen.

Der Messerkopf 1 umfasst zwei Druckstücke 2, 3, wobei das obere, dem Antriebsmotor 21 zugewandte Druckstück 2 als Anlageteller und das gegenüberliegende, dem Antriebsmotor 21 bzw. dem Getriebekopf 23 abgewandte Druckstück 3 als Spannplatte ausgeführt ist. Beide Druckstücke 2, 3 weisen nach dem Stand der Technik entsprechend der Darstellung nach Fig. 1 eine Kreisscheibenform auf. Zwischen den beiden Druckstücken 2, 3 ist ein Schneidmesser 5 aus Stahlblech eingespannt, welches durch Reibschluss mit den Druckstücken 2, 3 gemeinsam mit diesen drehend um eine Drehachse 4 angetrieben ist.

Das Schneidmesser 5 weist zwei Messerflügel 6 auf, die sich bezogen auf die Drehachse 4 diametral gegenüberliegen, und die sich in einer zur Drehachse 4 radialen Richtung 7 jeweils entlang einer Längsachse 8 erstrecken. Schneiden 26 der Messerflügel 6 treffen im Betrieb auf das zu schneidende Schnittgut. Die hierbei entstehenden Stoßbelastungen und auch ein ungleichförmiges, durch den als insbesondere einzylindrigen Verbrennungsmotor ausgeführten Antriebsmotor 21 verursachtes Drehmoment erzeugen Schwingungserregungen, die zu einer Schwingungsausbildung in den Messerflügeln 6 führen können.

Fig. 2 zeigt in einer Seitenansicht einen erfindungsgemäß weitergebildeten Messerkopf 1 nach Fig. 1 mit einem Schneidmesser 5 aus Stahlblech, welches ebenso wie beim Stand der Technik nach Fig. 1 zwischen zwei Druckstücken 2, 3 eingespannt ist. In Übereinstimmung mit der Ausführung nach Fig. 1 ist das obere, motorseitige erste Druckstück 2 als motorseitiger Anlageteller in Kreisscheibenform ausgebildet. Eine weitere Übereinstimmung mit der Ausführung nach Fig. 1 besteht darin, dass mindestens zwei Messerflügel 6 des Schneidmessers 5 vorgesehen sind, die sich in einer zur Drehachse 4 radialen Richtung 7 entlang einer Längsachse 8 erstrecken, und die in einem radial äußeren Schnittbereich 24 mit Schneiden 26 versehen sind. Es können aber auch Ausführungen des Schneidmessers 5 mit drei, vier oder mehr gleichmäßig über den Umfang verteilten Messerflügeln 6 zweckmäßig sein. Abweichend von der Ausgestaltung nach Fig. 1 können die Messerflügel 6 nach Fig. 2 optional noch radial außenliegende, nach unten zum Schnittgut hin und insbesondere parallel zur Drehachse 4 abgebogene Schnittenden 25 aufweisen, über die sich jeweils die Schneide 26 erstreckt. Anstelle des gezeigten erfindungsgemäßen Messerkopfes 1 für einen Freischneider nach Fig. 1 kann auch ein solcher für einen Rasenmäher oder dgl. vorgesehen sein.

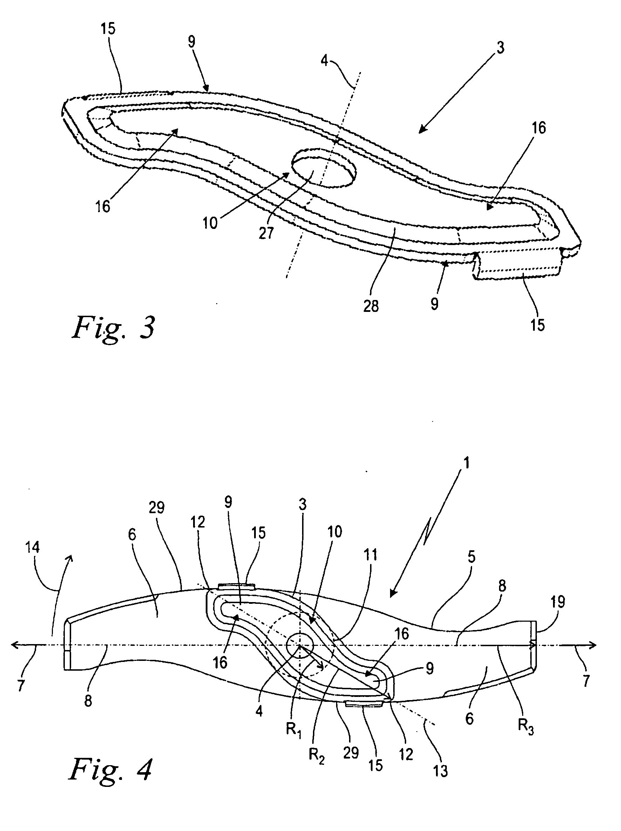

Das dem als Anlageteller ausgebildeten ersten Druckstück 2 gegenüberliegende zweite Druckstück 3 ist abweichend vom Stand der Technik nach Fig. 1 ausgeführt und weist einen radial inneren Nabenbereich 10 sowie einen radial äußeren Dämpfungsbereich 16 auf. Einzelheiten der Ausgestaltung des zweiten Druckstückes 3 ergeben sich aus der perspektivischen Darstellung nach Fig. 3. Demnach ist das Druckstück 3 in seinem radial inneren Nabenbereich 10 mit einer konzentrisch zur Drehachse 4 angeordneten Wellenöffnung 27 versehen, mittels derer das Druckstück 3 ebenso wie das Schneidmesser 5 (Fig. 2) auf einen nicht dargestellten Achszapfen des Messerkopfes 1 (Fig. 2) aufgesteckt und dadurch zentriert werden kann. Radial außerhalb des Nabenbereiches 10 schließt sich der Dämpfungsbereich 16 an, der durch mindestens einen radialen Dämpfungsvorsprung 9 des Druckstückes 3 gebildet ist. Im gezeigten Ausführungsbeispiel sind zwei rotationssymmetrisch zur Drehachse 4 und damit diametral sich gegenüberliegende Dämpfungsvorsprünge 9 vorgesehen, die je einem der beiden Messerflügel 6 nach Fig. 2 zugeordnet sind. Bei einer höheren Anzahl von Messerflügeln 6 (Fig. 2) kann auch eine höhere Anzahl von Dämpfungsvorsprüngen 9 zweckmäßig sein, demnach das Druckstück 3 für jeden Messerflügel 6 (Fig. 2) je einen radialen Dämpfungsvorsprungs 9 aufweist.

Das erfindungsgemäß ausgeführte Druckstück 3 nach Fig. 3 kann ein Guss- oder Frästeil sein und ist im gezeigten Ausführungsbeispiel als geprägtes Blechteil mit einer im Wesentlichen ebenen Grundform ausgebildet. Zur Versteifung ist in das Blechteil eine umlaufende Sicke 28 eingeprägt. Außerdem weist das Druckstück 3 in seinem radial äußeren Dämpfungsbereich 16 an allen Dämpfungsvorsprüngen 9 je eine umgebogene Lasche 15 auf, deren Funktion weiter unten im Zusammenhang mit Fig. 4 beschrieben wird. Das Stahlblech, aus dem das Schneidmesser 5 mit seinen Messerflügeln 6 gebildet ist, weist eine spezifische Masse von etwa 7,8 g/cm³ auf. Zumindest der Dämpfungsvorsprung 9, hier das Druckstück 3 mit den Dämpfungsvorsprüngen 9 insgesamt ist aus einem im Vergleich dazu leichteren Werkstoff mit einer geringeren spezifischen Masse gebildet. Dieser leichtere Werkstoff kann Aluminium oder dgl. sein und ist im gezeigten Ausführungsbeispiel Titan mit einer spezifischen Masse von etwa 4,5 g/cm³.

Fig. 4 zeigt eine Draufsicht des Messerkopfes 1 nach Fig. 2 mit dem Druckstück 3 nach Fig. 3. Der Nabenbereich 10 des Druckstückes 3 begrenzt einen Spannkreis 11 mit einem Radius R₁. Dies bedeutet, dass der Spannkreis 11 den maximal möglichen Radius R₁ aufweist, ohne über die Umfangskontur des Druckstückes 3 hervorzustehen. Der durch den Spannkreis 11 umschlossene Nabenbereich 10 entspricht in seiner Funktion dem kreisscheibenförmigen Druckstück 3 nach Fig. 1. Im radial außerhalb des Spannkreises 11 liegenden Dämpfungsbereich 16 schließen sich jeweils die Dämpfungsvorsprünge 9 an. Radial äußerste Punkte 12 der Dämpfungsvorsprünge 9 liegen in einem Radius R₂ zur Drehachse 4. Der Radius R₂ der radial äußersten Punkte 12 ist mindestens 1.5 mal so groß, bevorzugt mindestens 2 mal so groß wie der Radius R₁ des Spannkreises 11 und ist im gezeigten Ausführungsbeispiel etwa dreimal so groß wie dieser. Radial äußere Enden 19 der Messerflügel 6 liegen in einem Radius R₃ zur Drehachse 4. Der Radius R₂ der äußeren Punkte 12 der Dämpfungsvorsprünge 9 beträgt vorteilhaft mindestens das 0,3fache des Radius R₃ und liegt im gezeigten Ausführungsbeispiel vorteilhaft in einem Bereich zwischen dem 0,4fachen und dem 0,5fachen des Radius R₃.

Der Darstellung nach Fig. 4 ist noch zu entnehmen, dass das Druckstück 3 mit den Dämpfungsvorsprüngen 9 zwar rotationssymmetrisch zur Drehachse 4 ist, nicht jedoch spiegelsymmetrisch zu seinen durch die äußersten Punkte 12 laufenden Längsachsen 13 der Dämpfungsvorsprünge 9. Vielmehr weist er einen etwa S-förmig geschwungenen Grundriss auf. Im Übrigen ist noch zu erkennen, dass die Längsachsen 13 des Druckstückes 3 bzw. der Dämpfungsvorsprünge 9 nicht in Überdeckung mit den Längsachsen 8 der Messerflügel 6 liegen, sondern in der Drehebene relativ dazu um einen bestimmten Winkel versetzt angeordnet sind.

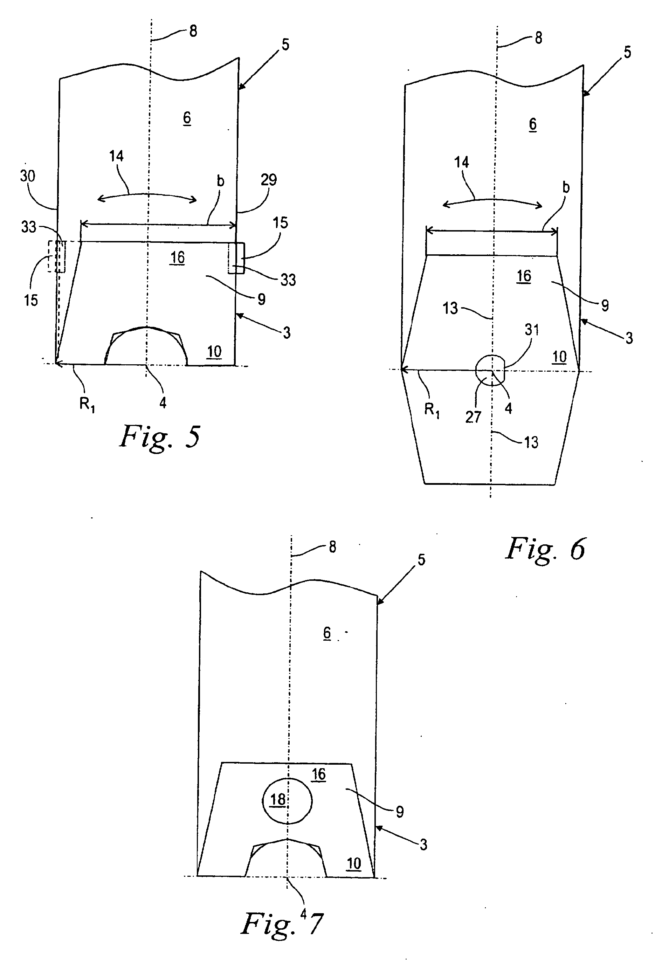

Die in Fig. 3 näher dargestellten Laschen 15 umgreifen zugeordnete Kanten 29 der Messerflügel 6, wie dies auch in der Seitenansicht nach Fig. 2 erkennbar ist. Hierdurch ist ein bezogen auf die durch einen Pfeil angegebene Drehrichtung 14 des Messerkopfes 1 wirkende Verdrehsicherung des Druckstückes 3 relativ zum Schneidmesser 5 gebildet. Im gezeigten Ausführungsbeispiel wirkt diese Verdrehsicherung in nur einem Drehrichtungssinn. Entsprechend der weiter unter noch näher erläuterten Darstellung nach den Fig. 5 und 6 kann aber auch eine Verdrehsicherung vorgesehen sein, die bezogen auf die Drehrichtung 14 zusätzlich im entgegengesetzten relativen Drehrichtungssinn wirkt. Die Verdrehsicherung zwischen den radialen Dämpfungsvorsprüngen 9 und dem jeweils zugeordneten Messerflügel 9 ist mittels der umgebogenen Lasche 15 bezogen auf die Drehrichtung 14 formschlüssig. Es kann auch eine umgekehrte Ausgestaltung zweckmäßig sein, bei der die Lasche 15 am jeweiligen Messerflügel 6 angeordnet ist und eine Kante des Dämpfungsvorsprunges 9 umgreift.

Die Fig. 5 bis 9 zeigen in schematischer Draufsicht verschiedene Varianten des Druckstückes 3 mit einem Dämpfungsvorsprung 9 im Zusammenspiel mit dem zugeordneten Messerflügel 6. Die in den Fig. 6 bis 9 gezeigten, zur Längsachse 8 symmetrischen Anordnungen fallen hinsichtlich ihrer Symmetrie nicht unter die Ansprüche. Der besseren Übersichtlichkeit halber ist immer nur eine Messerhälfte dargestellt, wobei die Dämpfungsvorsprünge 9 kürzer gezeichnet sind, als sie es in der praktischen Ausführung sind. Im Ausführungsbeispiel nach Fig. 5 weist das Druckstück 3 im Bereich der Drehachse 4 eine Breite auf, die das Doppelte des Radius R₁ beträgt. Ausgehend hiervon ist der Dämpfungsvorsprung 9 radial nach außen einseitig verjüngt, wodurch er an seinem radial äußeren Ende eine Breite b einnimmt. Diese Breite b ist geringer als das Doppelte des Radius R₁. Diese Breitenreduktion wirkt als Maßnahme zur Massereduktion des Druckstückes 3 in seinem radial außerhalb des Nabenbereichs 10 liegenden Dämpfungsbereich 16. Außerdem umgreift die Lasche 15 die Kante 29 des Messerflügels 6. Damit entspricht die Ausgestaltung nach Fig. 5 in ihren vorstehend beschriebenen Merkmalen prinzipiell dem Aufbau nach den Fig. 2 bis 4. Optional können aber auch an den Dämpfungsvorsprüngen 9 oder an anderer geeigneter Stelle eine zusätzliche Lasche 15 oder andere geeignete Mittel vorgesehen sein, die einen Formschluss mit dem Messerflügel 6 insbesondere an seiner gegenüberliegenden Kante 30 herstellen. In diesem Falle ist eine Verdrehsicherung zwischen dem Druckstück 3 und dem jeweiligen Messerflügel 6 in beiden Drehrichtungen 14 gebildet.

Zusätzlich kann optional eine Verliersicherung des Druckstückes 3 mit den Dämpfungsvorsprüngen 9 gegenüber dem Schneidmesser 5 vorgesehen sein. Im gezeigten Ausführungsbeispiel sind hierzu die Laschen 15 um die Messerflügel 6 umgebördelt, so dass zusätzliche Laschen 33 die Messerflügel 6 umgreifen und dabei auf der dem Grundkörper des Druckstückes 3 gegenüberliegenden Flachseite der Messerflügel 6 anliegen. Anstelle einer solchen Umbördelung oder anderer geeigneter formschlüssiger Maßnahmen, oder auch ergänzend dazu, kann eine Verklebung, Verlötung und/oder Verschweißung insbesondere in Form einer Punktschweißung als Verliersicherung vorgesehen sein.

Fig. 6 zeigt eine Variante der Anordnung nach Fig. 5, bei der ebenfalls eine Breitenreduktion des Druckstückes 3 in seinem Dämpfungsbereich 16 relativ zum Nabenbereich 10 vorgesehen ist. Die hierzu ausgebildeten Abschrägungen sind beidseitig des Messerflügels 6 angeordnet und symmetrisch zur Längsachse 13 des Dämpfungsvorsprunges 9 ausgebildet. Auch hierdurch ergibt sich eine reduzierte Breite b. Bei der gezeigten symmetrischen Ausgestaltung liegt die Längsachse 13 des Dämpfungsvorsprunges 9 in Überdeckung mit der Längsachse 8 des Messerflügels 6. Als Verdrehsicherung zwischen dem Druckstück 3 und dem Schneidmesser 5 weist die Wellenöffnung 27 des Druckstückes 3 eine Abflachung 31 auf, wobei der nicht dargestellte, durch die Wellenöffnung 27 hindurchgeführte Achszapfen mit einem Querschnitt in gleicher Form versehen ist. Eine mittige Öffnung im Schneidmesser 5 ist in gleicher Weise geformt, in dessen Folge das Schneidmesser 5 und das Druckstück 3 in ihrer Winkellage relativ zum Achszapfen fixiert sind und sich deshalb auch nicht gegeneinander verdrehen können. Die hierdurch gebildete Verdrehsicherung wirkt in beiden Drehrichtungen 14.

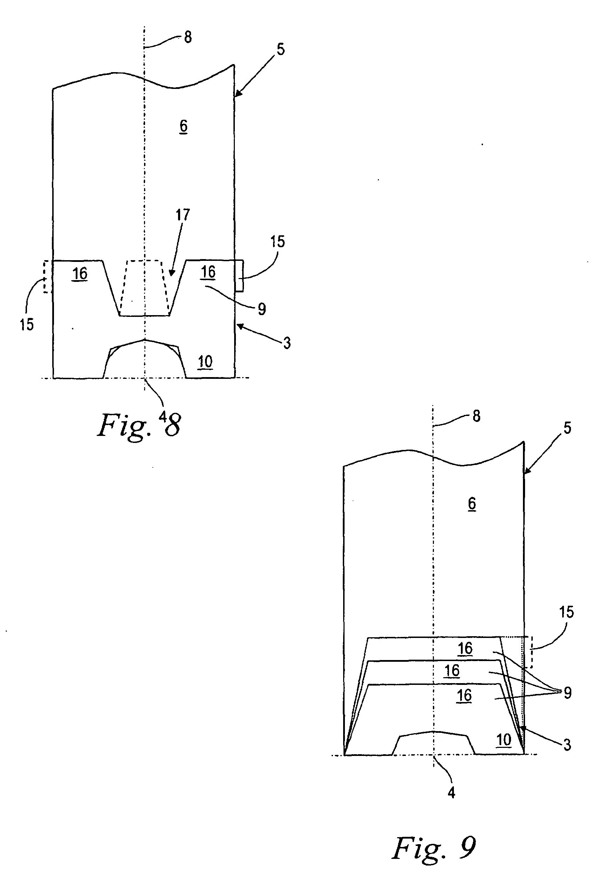

Fig. 7 zeigt eine Variante der Anordnung nach Fig. 6, bei der als zusätzliche Maßnahme zur Massenreduktion im radial äußeren Dämpfungsbereich 16 eine Öffnung 18 angeordnet ist. Eine Verdrehsicherung ist hier nicht explizit dargestellt. Alternativ zu den vorgenannten Optionen kann eine Verdrehsicherung beispielsweise durch Vernietung, Verschweißung oder Verklebung des Druckstückes 3 mit dem Schneidmesser 5 erzeugt werden. Eine weitere Variante ist noch in Fig. 8 dargestellt, bei der anstelle der Öffnung 18 (Fig. 7) eine radial nach außen offene Aussparung 17 vorgesehen ist. Die Verdrehsicherung ist hier analog zur Ausgestaltung nach Fig. 5 ausgebildet.

In Fig. 9 ist noch eine weitere optionale Ausführungsform dargestellt, bei der mehrere, als Einzelteile ausgebildete Dämpfungsvorsprünge 9 lamellenartig übereinander gestapelt sind. Die Dämpfungsvorsprünge 9 können gleich lang sein. Im gezeigten Ausführungsbeispiel weisen sie eine unterschiedliche, hier kaskadenartig gestufte radiale Erstreckung auf, wobei der direkt am Messerflügel 6 anliegende Dämpfungsvorsprung 9 in der radialen Richtung am längsten und der in der Stapelfolge gegenüberliegende, oberste Dämpfungsvorsprung 9 die kürzeste Länge aufweist. Auch hier kann bei einem oder sämtlichen der gezeigten Dämpfungsvorsprünge 9 eine Verdrehsicherung beispielsweise in Form der gestrichelt angedeuteten Lasche 15 oder in anderer geeigneter Weise vorgesehen sein.

Sofern nicht abweichend beschrieben, stimmen die Ausführungsbeispiele nach den Fig. 2 bis 9 in ihren übrigen Merkmalen und Bezugszeichen miteinander überein.

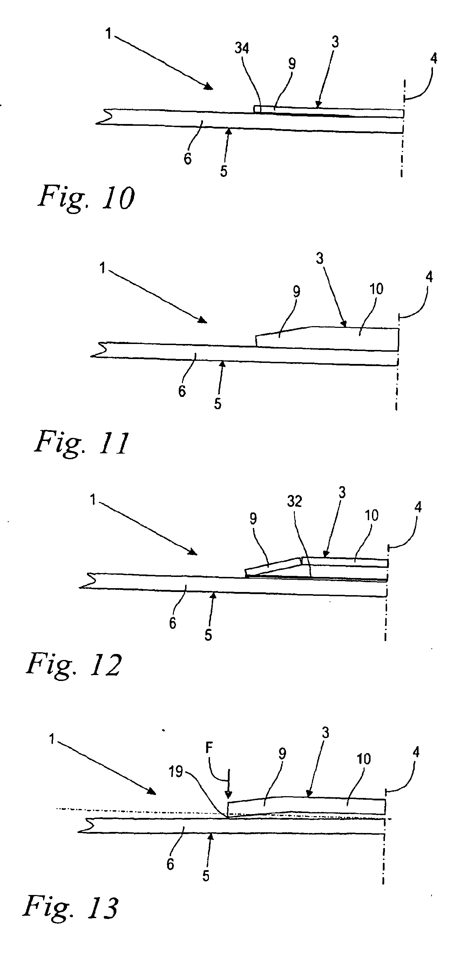

Die Fig. 10 bis 13 zeigen in schematischer Querschnittsdarstellung verschiedene Ausgestaltungen der Messerköpfe 1 nach den Fig. 2 bis 9. In der Ausführungsform nach Fig. 10 sind die Messerflügel 6 des Schneidmessers 5 und auch das Druckstück 3 mit seinen Dämpfungsvorsprüngen 9 als im Wesentlichen ebene, flache Platte aus Blech mit jeweils gleichbleibender Dicke ausgebildet. Der Einfachheit halber und aus Gründen der Symmetrie zur Drehachse 4 ist nur der Bereich jeweils eines Messerflügels 6 und eines Dämpfungsvorsprunges 9 dargestellt, wobei jedoch sinngemäß das Gleiche auch für alle weiteren Messerflügel 6 und Dämpfungsvorsprünge 9 gilt. Das Druckstück 3 liegt mit seinem Dämpfungsvorsprung 9 flach unter axialer Vorspannung an der Oberfläche des Schneidmessers 5 an. Optional können zumindest am Dämpfungsvorsprung 9, ggf. auch am gesamten Druckstück 3 auf dessen dem Messerflügel 6 zugewandten Seite reibwerterhöhende Maßnahmen getroffen sein. Hierzu ist schematisch eine Beschichtung 34 vorgesehen, die zur Erhöhung des Reibwertes beispielsweise durch Flammspritzen aufgebracht ist. Die Beschichtung 34 kann eine Diamant-, Siliziumcarbid-oder Wolframcarbid-Beschichtung sein oder aus einem anderen vergleichbaren, geeigneten Material bestehen. Außerdem kann alternativ oder in Ergänzung dazu eine reibwerterhöhende Maßnahme in Form einer Oberflächenstrukturierung vorgesehen sein.

Fig. 11 zeigt eine Variante der Anordnung nach Fig. 10, bei der das Druckstück 3 radial außerhalb des Spannkreises 11 im Dämpfungsbereich 16 mit einer kontinuierlich nach außen sich verjüngenden Dickenreduktion versehen ist. Dies wirkt als Maßnahme zur Massereduktion am Dämpfungsvorsprung 9 und kann ergänzend zu den vorstehend im Zusammenhang mit den Fig. 5 bis 9 beschriebenen Maßnahmen eingesetzt werden. Die gezeigte dickenreduzierte Querschnittsform kann spanabhebend oder gusstechnisch ausgebildet sein. Im gezeigten Ausführungsbeispiel ist hierzu vorteilhaft ein bombiertes Blech vorgesehen.

In der Ausführungsvariante nach Fig. 12 ist das Druckstück 3 als tiefgezogenes Blechteil mit konstanter Dicke ausgebildet, wobei der radial äußere Dämpfungsbereich 16 gegenüber dem inneren Nabenbereich 10 vergleichbar zu einem umlaufenden Tellerrand umgeformt ist. Es entsteht eine umlaufende Kante 32, mit der das Druckstück 3 auf dem Schneidmesser 5 aufliegt, und die den Nabenbereich 10 elastisch auf Abstand zum Schneidmesser 5 hält. Alternativ kann eine Ausführung nach Fig. 13 zweckmäßig sein, bei der das Druckstück 13 ebenfalls als Tiefziehteil aus Blech hergestellt ist. Hierbei ist jedoch nur ein radial äußeres Ende 19 des Dämpfungsvorsprunges 9 zum Messerflügel 6 hin abgewinkelt und liegt entsprechend einer Kraft F mit Vorspannung am Messerflügel 6 an. Hierdurch erfährt auch der Messerflügel 6 eine elastisch federnde axiale Auslenkung zur radialen Richtung 7.

In den Übrigen Merkmalen und Bezugszeichen stimmen die Ausführungsbeispiele nach den Fig. 10 bis 13 untereinander sowie mit denjenigen nach den Fig. 2 bis 9 überein.

## Patentansprüche

1. Messerkopf (1) eines Arbeitsgerätes, insbesondere eines Freischneiders, umfassend ein zwischen zwei Druckstücken (2, 3) eingespanntes, um eine Drehachse (4) drehend antreibbares Schneidmesser (5) mit mindestens zwei Messerflügeln (6), wobei sich die Messerflügel (6) in einer zur Drehachse (4) radialen Richtung (7) entlang einer Längsachse (8) erstrecken, wobei zumindest ein Druckstück (3) mindestens einen radialen Dämpfungsvorsprung (9) aufweist, der am Messerflügel (6) anliegt,
**dadurch gekennzeichnet, dass** der radiale Dämpfungsvorsprung (9) eine Längsachse (13) aufweist, die gegenüber der Längsachse (8) des Messerflügels (6) winkelversetzt ist.

2. Messerkopf nach Anspruch 1,
**dadurch gekennzeichnet, dass** das Druckstück (3) für jeden Messerflügel (6) je einen radialen Dämpfungsvorsprung (9) aufweist.

3. Messerkopf nach Anspruch 1 oder 2,
**dadurch gekennzeichnet, dass** ein Nabenbereich (10) des Druckstückes (3) einen Spannkreis (11) mit einem Radius (R₁) zur Drehachse (4) begrenzt, dass ein radial äußerster Punkt (12) des Dämpfungsvorsprunges (9) in einem Radius (R₂) zur Drehachse (4) liegt, und dass der Radius (R₂) des radial äußersten Punktes (12) mindestens 1,5 mal, bevorzugt mindestens doppelt so groß und insbesondere mindestens dreimal so groß ist wie der Radius (R₁) des Spannkreises (11).

4. Messerkopf nach einem der Ansprüche 1 bis 3,
**dadurch gekennzeichnet, dass** das erste Druckstück (2) als motorseitiger Anlageteller in Kreisscheibenform ausgebildet ist, und dass das zweite Druckstück (3) mit dem mindestens einen radialen Dämpfungsvorsprung (9) versehen ist.

5. Messerkopf nach einem der Ansprüche 1 bis 4,
**dadurch gekennzeichnet, dass** eine in mindestens eine, insbesondere in beide Drehrichtungen (14) wirkende Verdrehsicherung zwischen dem Schneidmesser (5) und dem Druckstück (3) mit dem mindestens einen radialen Dämpfungsvorsprung (9) vorgesehen ist.

6. Messerkopf nach Anspruch 5,
**dadurch gekennzeichnet, dass** zwischen dem radialen Dämpfungsvorsprung (9) und dem zugeordneten Messerflügel (6) eine formschlüssige Verdrehsicherung insbesondere in Form einer umgebogenen Lasche (15) vorgesehen ist.

7. Messerkopf nach einem der Ansprüche 1 bis 6,
**dadurch gekennzeichnet, dass** am Dämpfungsvorsprung (9) in einem radial außerhalb des Nabenbereichs (10) liegenden Dämpfungsbereich (16) Maßnahmen zur Massereduktion insbesondere in Form einer Breiten- und/oder Dickenreduktion, von Aussparungen (17), Öffnungen (18) und/oder dergleichen getroffen sind.

8. Messerkopf nach einem der Ansprüche 1 bis 7,
**dadurch gekennzeichnet, dass** mehrere Dämpfungsvorsprünge (9) insbesondere mit unterschiedlicher radialer Erstreckung übereinandergestapelt sind.

9. Messerkopf nach einem der Ansprüche 1 bis 8,
**dadurch gekennzeichnet, dass** ein radial äußeres Ende (19) des Dämpfungsvorsprungs (9) zum Messerflügel (6) hin abgewinkelt ist und mit Vorspannung am Messerflügel (6) anliegt.

10. Messerkopf nach einem der Ansprüche 1 bis 9,
**dadurch gekennzeichnet, dass** zumindest der Dämpfungsvorsprung (9) und insbesondere das Druckstück (3) mit dem mindestens einen Dämpfungsvorsprung (9) insgesamt aus einem leichten Werkstoff, insbesondere aus Titan gebildet ist, dessen spezifische Masse geringer ist als die spezifische Masse des Schneidmessers (5).

11. Messerkopf nach einem der Ansprüche 1 bis 10,
**dadurch gekennzeichnet, dass** am Dämpfungsvorsprung (9) auf dessen dem Messerflügel (6) zugewandten Seite reibwerterhöhende Maßnahmen getroffen sind.

12. Messerkopf nach einem der Ansprüche 1 bis 11,
**dadurch gekennzeichnet, dass** eine Verliersicherung des Druckstückes (3) mit dem mindestens einen Dämpfungsvorsprung (9) gegenüber dem Schneidmesser (5) vorgesehen ist.

## Claims

1. A cutting head (1) of a tool, in particular a brush cutter, comprising a cutting blade (5) which is clamped between two pressure pieces (2, 3) and can be driven in rotation about an axis of rotation (4), with at least two blade wings (6), the blade wings (6) extending in a direction (7) radial to the axis of rotation (4) along a longitudinal axis (8), with at least one pressure piece (3) having at least one radial damping projection (9) which lies against the blade wing (6),
**characterised in that** the radial damping projection (9) has a longitudinal axis (13) which is offset at an angle relative to the longitudinal axis (8) of the blade wing (6).

2. A cutting head according to Claim l,
**characterised in that** the pressure piece (3) has one radial damping projection (9) in each case for each blade wing (6).

3. A cutting head according to Claim 1 or 2,
**characterised in that** a hub region (10) of the pressure piece (3) defines a clamping circle (11) with a radius (R₁) to the axis of rotation (4), **in that** a radially outermost point (12) of the damping projection (9) lies at a radius (R₂) to the axis of rotation (4), and **in that** the radius (R₂) of the radially outermost point (12) is at least 1.5 times, preferably at least twice, as large, and in particular at least three times as large, as the radius (R₁) of the clamping circle (11).

4. A cutting head according to one of Claims 1 to 3,
**characterised in that** the first pressure piece (2) is formed as a motor-side contact plate of circular-disc form, and **in that** the second pressure piece (3) is provided with the at least one radial damping projection (9).

5. A cutting head according to one of Claims 1 to 4,
**characterised in that** an anti-twist means which acts in at least one, in particular in both, direction(s) of rotation (14) is provided between the cutting blade (5) and the pressure piece (3) with the at least one radial damping projection (9).

6. A cutting head according to Claim 5,
**characterised in that** a positively-locking anti-twist means in particular in the form of a bent-over tab (15) is provided between the radial damping projection (9) and the associated blade wing (6).

7. A cutting head according to one of Claims 1 to 6,
**characterised in that** measures for reducing weight in particular in the form of a reduction in width and/or thickness, of recesses (17), openings (18) and/or the like are taken on the damping projection (9) in a damping region (16) lying radially outside the hub region (10).

8. A cutting head according to one of Claims 1 to 7,
**characterised in that** a plurality of damping projections (9) in particular with different radial extents are stacked one above another.

9. A cutting head according to one of Claims 1 to 8,
**characterised in that** a radially outer end (19) of the damping projection (9) is angled towards the blade wing (6) and lies with initial tension against the blade wing (6).

10. A cutting head according to one of Claims 1 to 9,
**characterised in that** at least the damping projection (9) and in particular the pressure piece (3) with the at least one damping projection (9) is formed overall from a lightweight material, in particular from titanium, the specific weight of which is less than the specific weight of the cutting blade (5).

11. A cutting head according to one of Claims 1 to 10,
**characterised in that** measures to increase the coefficient of friction are taken on the damping projection (9) on the side thereof facing the blade wing (6).

12. A cutting head according to one of Claims 1 to 11,
**characterised in that** a means for protection from loss of the pressure piece (3) with the at least one damping projection (9) relative to the cutting blade (5) is provided.

## Revendications

1. Tête de coupe (1) d'un appareil, en particulier d'une débroussailleuse, comprenant une lame (5) serrée entre deux éléments de pression (2, 3), apte à être entraînée en rotation sur un axe de rotation (4) et pourvue d'au moins deux ailes de lame (6), étant précisé que les ailes de lame (6) s'étendent dans un sens (7) radial par rapport à l'axe de rotation (4), le long d'un axe longitudinal (8), et qu'au moins un élément de pression (3) présente au moins une saillie d'amortissement radiale (9) qui est appliquée contre l'aile de lame (6),
**caractérisée en ce que** la saillie d'amortissement radiale (9) présente un axe longitudinal (13) qui présente un décalage angulaire par rapport à l'axe longitudinal (8) de l'aile de lame (6).

2. Tête de coupe selon la revendication 1,
**caractérisée en ce que** l'élément de pression (3) présente pour chaque aile de lame (6) une saillie d'amortissement radiale (9).

3. Tête de coupe selon la revendication 1 ou 2,
**caractérisée en ce qu'**une zone de moyeu (10) de l'élément de pression (3) délimite un cercle de serrage (11) avec un rayon (R₁) par rapport à l'axe de rotation (4), **en ce qu'**un point radialement extérieur (12) de la saillie d'amortissement (9) est situé dans un rayon (R₂) par rapport à l'axe de rotation (4), et **en ce que** le rayon (R₂) du point radialement extérieur (12) est au moins 1,5 fois, de préférence au moins deux fois et plus spécialement au moins trois plus grand que le rayon (R₁) du cercle de serrage (11).

4. Tête de coupe selon l'une des revendications 1 à 3,
**caractérisée en ce que** le premier élément de pression (2) est conçu comme un rebord d'application, situé côté moteur, en forme de disque, et **en ce que** le second élément de pression (3) est pourvu de ladite saillie d'amortissement radiale (9).

5. Tête de coupe selon l'une des revendications 1 à 4,
**caractérisée en ce qu'**il est prévu entre la lame de coupe (5) et l'élément de pression (3) pourvu de ladite saillie d'amortissement radiale (9) un dispositif anti-rotation qui agit dans au moins un sens de rotation (14), en particulier dans les deux sens de rotation (14).

6. Tête de coupe selon la revendication 5,
**caractérisée en ce qu'**il est prévu entre la saillie d'amortissement radiale (9) et l'aile de lame (6) associée un dispositif anti-rotation par complémentarité de forme, en particulier sous la forme d'une patte recourbée (15).

7. Tête de coupe selon l'une des revendications 1 à 6,
**caractérisée en ce que** des mesures pour réduire la masse sont prises au niveau de la saillie d'amortissement (9), dans une zone d'amortissement (16) située radialement à l'extérieur de la zone de moyeu (10), en particulier sous la forme d'une réduction en largeur et/ou en épaisseur, d'évidements (17), d'ouvertures (18) et/ou d'éléments similaires.

8. Tête de coupe selon l'une des revendications 1 à 7,
**caractérisée en ce que** plusieurs saillies d'amortissement (9) présentant en particulier des extensions radiales différentes sont superposées.

9. Tête de coupe selon l'une des revendications 1 à 8,
**caractérisée en ce qu'**une extrémité radialement extérieure (19) de la saillie d'amortissement (9) est coudée en direction de l'aile de lame (6) et est appliquée contre l'aile de lame (6) avec une contrainte.

10. Tête de coupe selon l'une des revendications 1 à 9,
**caractérisée en ce que** la saillie d'amortissement (9), au moins, et en particulier l'élément de pression (3) avec la ou les saillies d'amortissement (9) sont formés dans leur ensemble à partir d'un matériau léger, en particulier de titane, dont la masse spécifique est plus faible que la masse spécifique de la lame de coupe (5).

11. Tête de coupe selon l'une des revendications 1 à 10,
**caractérisée en ce que** des mesures augmentant le coefficient de frottement sont prises sur la saillie d'amortissement (9), sur son côté tourné vers l'aile de lame (6).

12. Tête de coupe selon l'une des revendications 1 à 11,
**caractérisée en ce qu'**il est prévu de rendre l'élément de pression (3) avec la ou les saillies d'amortissement (9) imperdables par rapport à la lame de coupe (5).
